# FASCICULE DE BREVET EUROPEEN

(11) **EP 1 914 532 B1**
(45) Date de publication et mention de la délivrance du brevet: **26.12.2012**
(21) Numéro de dépôt: 07118244.8
(22) Date de dépôt: 10.10.2007
(51) Int. Cl.: G01M 3/22, G01M 3/38

(54) **Procédé et dispositif de détection de fuites par spectroscopie d'émission optique**
Verfahren und Vorrichtung zur Feststellung von Lecks durch optische Emissionsspektroskopie
Method and device for detecting leaks by optical emission spectroscopy

(30) Priorité: 12.10.2006 FR 0654208
(43) Date de publication de la demande: 23.04.2008
(73) Titulaire: Adixen Vacuum Products, 74000 Annecy (FR)
(72) Inventeur: Bounouar, Julien, 74000, ANNECY (FR)
(74) Mandataire: Sogan, Gloria

(56) Documents cités:
- US-A- 5 789 754
- US-A1- 2003 046 976
- US-A1- 2004 083 797

## Description

La présente invention concerne le contrôle de l'étanchéité des enceintes destinées à contenir des fluides que l'on veut isoler de l'atmosphère extérieure.

L'invention peut s'appliquer à tous types d'enceinte, mais plus spécialement aux chambres de procédés utilisées dans la fabrication de semi-conducteurs ou de microsystèmes électromécaniques (MEMS).

Dans la fabrication de semi-conducteurs ou de microsystèmes électromécaniques, on traite des tranches d'un matériau semi-conducteur, tel que le silicium, dans un équipement comprenant diverses enceintes dans lesquelles on fait le vide. Ces enceintes peuvent être, de façon non limitative, une chambre de procédés ou une chambre de transfert.

Dans la chambre de procédés, une tranche d'un matériau semi-conducteur, tel que le silicium, est soumise à l'action d'un plasma de gaz, qui modifie sa structure superficielle pour réaliser les composants semi-conducteurs ou les microsystèmes électromécaniques. Le mélange gazeux présent dans l'enceinte est à très faible pression, de l'ordre de 10 mTorr à 50 Torr. La qualité du résultat obtenu par le procédé dépend essentiellement de la composition du mélange gazeux présent dans l'enceinte.

On comprend que la présence d'éventuelles fuites de l'enceinte perturbe la composition du mélange gazeux à l'intérieur de l'enceinte, dès lors que l'enceinte est elle-même placée dans l'atmosphère ambiante, et que les fuites éventuelles autorisent les gaz composant l'air à pénétrer progressivement dans l'enceinte.

Ces fuites peuvent apparaître progressivement au cours de la vie d'un équipement à enceintes ou chambres sous vide. Ces fuites peuvent également se produire après des opérations de maintenance dans lesquelles on a, par exemple, remplacé certains joints d'étanchéité. II est donc nécessaire de contrôler l'état d'étanchéité de telles enceintes, par exemple après des opérations de maintenance, mais également tout au long des périodes d'utilisation des enceintes.

On connaît déjà diverses méthodes de détection des fuites d'une enceinte. Les méthodes les plus couramment utilisées font appel à la détection du passage de l'hélium à travers les fuites. On utilise de cette façon la propriété de l'hélium qui traverse les petites fuites plus aisément que les autres gaz, du fait de la petite taille de sa molécule.

Dans un premier procédé de test à l'hélium, on évacue l'air intérieur de l'enceinte jusqu'à une pression faible, par exemple de l'ordre de 10 hPa, pour introduire ensuite, dans l'enceinte, de l'hélium jusqu'à une pression de l'ordre de 10³ hPa. On recherche alors la présence de grosses fuites en détectant la présence ponctuelle d'hélium autour de l'enceinte elle-même placée dans une chambre de test étanche, à l'aide d'un détecteur de fuites hélium. La détection doit être faite pour des concentrations d'hélium bien supérieures à la concentration naturelle de l'hélium dans l'air. Cela nécessite une alimentation en hélium, et une chambre de test étanche pour enfermer l'enceinte à tester. Du fait de la grande quantité d'hélium à déceler, la détection peut se faire aisément.

Avec un tel procédé, il n'est pas possible de réaliser des mesures en temps réel, c'est-à-dire pendant l'utilisation de l'enceinte ; le procédé n'est pas utilisé pour la fabrication de semi-conducteurs, et l'utilisation de bouteilles d'hélium pour la détection peut être contraignante.

Un second procédé de test à l'hélium consiste à établir à l'intérieur de l'enceinte une surpression d'hélium. La détection d'hélium dans l'atmosphère extérieure peut alors se faire à l'aide d'un renifleur d'hélium. Cette mesure est effectuée sans chambre de test étanche, mais nécessite encore l'utilisation de bouteilles d'hélium.

Un troisième procédé de test à l'hélium consiste en la mise sous vide de l'enceinte connectée en série avec un détecteur de fuite qui va détecter dans l'enceinte l'hélium que l'on asperge depuis l'extérieur de l'enceinte. II faut encore utiliser des bouteilles d'hélium.

Pour réaliser une mesure sans apport d'hélium supplémentaire, et sans chambre de test étanche, on peut raccorder l'enceinte à tester à un analyseur de gaz résiduel (RGA). L'analyseur de gaz résiduel est un spectromètre de masse à séparateur quadripolaire. II permet de mesurer des pressions partielles de chaque gaz dans le mélange gazeux contenu dans l'enceinte à tester. Un tel dispositif est toutefois très onéreux, fragile, et lourd à mettre en oeuvre. En outre, il ne fonctionne que pour des pressions inférieures à 10 mTorr environ, limite qui est très inférieure aux pressions habituellement rencontrées dans la plupart des étapes des procédés de fabrication de semi-conducteurs ou de microsystèmes électromécaniques. On ne peut donc pas utiliser un tel analyseur de gaz résiduel pour contrôler en temps réel l'absence de fuite dans une enceinte de chambre de procédés dans l'industrie des semi-conducteurs.
Des tels dispositifs de l'art antérieur sont décrits dans les documents US 2004/0083797, US 5789754, US 2003/0046376 et DE 19853049.

Le problème proposé par la présente invention est d'assurer une détection de fuites d'enceinte sans interruption du procédé pour lequel l'enceinte est normalement utilisée.

La détection de fuites doit pouvoir être réalisée dans la plage des pressions que l'on rencontre dans les procédés habituels d'utilisation de l'enceinte, et sans modification sensible de la composition du mélange gazeux présent dans l'enceinte lors de son utilisation normale.

De préférence, la détection de fuite doit être rapide, permettant une réaction immédiate en cas de dégradation subite des propriétés d'étanchéité de l'enceinte. L'objectif est d'éviter les contaminations gazeuses éventuelles pouvant entraîner la dégradation des produits traités dans l'enceinte, par exemple des tranches de semi-conducteurs tels que le silicium dans la fabrication de composants microélectroniques.

Selon l'invention, la détection de fuite peut être réalisée soit en temps réel pendant les étapes des procédés, soit pour vérifier l'étanchéité après les étapes de maintenance.

Selon l'invention, on évite également d'avoir recours à des sources spécifiques de gaz de test, tel que l'hélium, et on évite d'avoir recours à des détecteurs onéreux, tels que les spectromètres de masse ou les analyseurs de gaz résiduels.

Pour atteindre ces buts ainsi que d'autres, l'invention propose un procédé selon la revendication 1 pour détecter les fuites gazeuses d'une enceinte étanche, comprenant au moins une étape au cours de laquelle :
- l'enceinte est en dépression vis-à-vis de l'atmosphère extérieure et contient un gaz ou mélange de gaz majoritaire dans lequel est absent au moins un gaz de test présent dans l'atmosphère extérieure à l'enceinte,
- on génère un plasma du ou des gaz présents à l'intérieur de l'enceinte,
- on recherche, dans le spectre optique de la radiation émise par le plasma du ou des gaz présents dans l'enceinte, la présence d'au moins une raie spectrale distinctive dudit gaz de test.

Selon l'invention, le gaz majoritaire à l'intérieur de l'enceinte est un gaz neutre monoatomique.

La détection est facilitée en prévoyant que le gaz majoritaire à l'intérieur de l'enceinte est un gaz monoatomique. En effet, les gaz monoatomiques présentent un spectre d'émission optique dont les raies sont étroites, relativement peu nombreuses et groupées dans des plages bien définies.

Le gaz majoritaire doit être neutre, par exemple l'argon, pour éviter la recombinaison du gaz pendant la génération de plasma.

Selon une première possibilité, le gaz ou mélange de gaz majoritaire est le gaz de procédé présent dans l'enceinte pour la mise en oeuvre dans cette même enceinte d'un procédé pour lequel l'enceinte est normalement utilisée.

Selon une seconde possibilité, le gaz ou mélange de gaz majoritaire est un gaz de purge que l'on introduit dans l'enceinte pour réaliser sa purge avant et/ou pendant la détection des fuites éventuelles.

Pendant l'étape de détection de fuite, la pression gazeuse dans l'enceinte est avantageusement dans la plage de pressions de 10 mTorr à 50 Torr environ, permettant la génération et l'entretien d'un plasma du ou des gaz présents à l'intérieur de l'enceinte.

Le plasma peut être généré dans l'enceinte à tester, dans une canalisation de vide raccordant l'enceinte à un dispositif de pompage ou bien dans une dérivation de la canalisation de vide.

Le procédé s'applique par exemple aux enceintes utilisées dans la fabrication de semi-conducteurs ou de microsystèmes électromécaniques, par exemple aux chambres sous vide d'un équipement de traitement de tranches de silicium.

Par chambres sous vide on entend par exemple une chambre de procédés, une chambre de transfert ou toute autre enceinte d'un équipement de traitement de tranches de silicium.

Selon une variante d'exécution de l'invention, l'enceinte à tester est connectée à une autre enceinte contenant le gaz de test. Notamment l'enceinte à tester est une chambre de transfert et l'autre enceinte est une chambre de procédé, dans ce cas le gaz de test peut être un gaz de procédé.

L'une des difficultés du procédé est de détecter de manière certaine et rapide la présence du gaz de test. On facilite cette détection en faisant en sorte que le gaz de test possède un spectre d'émission optique suffisamment différent de celui du gaz ou du mélange de gaz majoritaire, de sorte qu'il soit aisément décelable par spectroscopie d'émission optique.

De préférence, le gaz de test est un gaz facile à amorcer pour générer un plasma.

De façon avantageuse d'un point de vue économique, le gaz de test peut être un constituant de l'air tel que O₂, H₂O, N₂. On pourra préférer l'azote N₂. De la sorte, le gaz de test est naturellement présent et aisément disponible dans l'atmosphère ambiante qui entoure l'enceinte lors de son utilisation normale.

L'azote est majoritairement présent dans l'air, facile à amorcer. Son spectre est facile à interpréter.

De préférence, le gaz de test est l'azote, et la raie spectrale distinctive est à une longueur d'onde de 337,1 nm. La raie spectrale distinctive est aisément détectable vis-à-vis des spectres des autres gaz habituellement utilisés dans l'enceinte, en particulier vis-à-vis du spectre de l'argon.

Selon un autre aspect, l'invention propose un dispositif de détection de fuites dans une enceinte selon la revendication 8, mettant en oeuvre le procédé de détection défini ci-dessus. Ce dispositif comprend :
- un dispositif de génération de plasma et des moyens pour sa mise en communication avec l'enceinte,
- un spectromètre optique, adapté pour recevoir le rayonnement du plasma et pour établir le spectre caractéristique des espèces gazeuses présentes dans l'enceinte,
- des moyens de détection de la présence d'au moins une raie spectrale dans ledit spectre caractéristique, et
- des moyens d'introduction d'un gaz neutre monoatomique.

La détection par un spectromètre optique est particulièrement peu onéreuse, et peut être réalisée aux pressions habituellement présentes dans les chambres de procédés de l'industrie des semi-conducteurs.

Le dispositif de génération de plasma peut avantageusement comprendre une source plasma de type ICP, et un générateur de puissance.

Le spectromètre optique peut avantageusement comporter un capteur CCD et un réseau de diffraction adapté pour obtenir un spectre entre 150 et 900 nm, plus avantageusement au voisinage de 337,1 nm. Un tel spectromètre optique est ainsi adapté à la détection des fuites à l'aide de l'azote par la recherche de la raie spectrale distinctive à la longueur d'onde de 337,1 nm.

En pratique, le dispositif selon l'invention peut être raccordé à une canalisation de vide raccordant un dispositif de pompage à l'enceinte, qui assure son fonctionnement normal pour les procédés de fabrication de semi-conducteurs.

Dans un procédé de fonctionnement normal de l'enceinte, par exemple un procédé de gravure de tranches de semi-conducteurs, on utilise généralement plusieurs étapes au cours desquelles les mélanges gazeux présents dans l'enceinte diffèrent d'une étape à l'autre. La détection de fuites par le procédé selon l'invention peut être plus ou moins facile suivant la nature du mélange gazeux présent dans l'enceinte au moment de la détection. II peut donc être avantageux de procéder à la détection de fuites pendant les étapes où cette détection est la plus facile, et de différer la détection pendant les étapes où cette détection pourrait être difficile, peu précise, voire impossible.

Dans ce cas, le dispositif selon l'invention peut avantageusement comprendre des moyens pour synchroniser la détection de fuite avec les étapes du procédé de fonctionnement normal de l'enceinte.

L'interprétation correcte des résultats d'une détection de fuites peut nécessiter de connaître les événements fonctionnels de l'équipement pouvant expliquer l'introduction de certains gaz dans l'enceinte. Pour cela on peut prévoir des moyens pour visualiser de manière synchrone l'évolution temporelle de présence du gaz de test et les événements fonctionnels de l'équipement incorporant l'enceinte à tester.

D'autres objets, caractéristiques et avantages de la présente invention ressortiront de la description suivante de modes de réalisation particuliers, faite en relation avec les figures jointes, parmi lesquelles :
- la figure 1 illustre schématiquement une réalisation pratique d'un dispositif de détection de fuites selon un mode de réalisation de la présente invention ;
- la figure 2 illustre un spectre d'émission optique de l'azote ;
- la figure 3 illustre un spectre d'émission optique de l'argon ; et
- la figure 4 illustre un spectre d'émission optique de l'air.

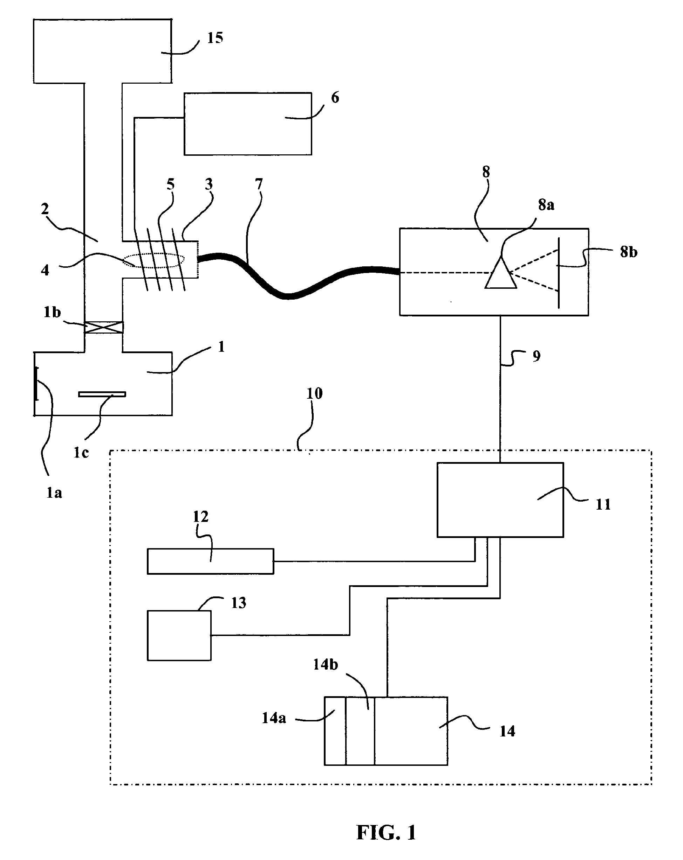

Dans le mode de réalisation illustré sur la figure 1, le dispositif de détection de fuites selon l'invention est utilisé pour détecter les fuites d'une enceinte 1 telle qu'une chambre de procédés ou une chambre de transfert utilisée dans la fabrication de semi-conducteurs ou de microsystèmes électromécaniques (MEMS). Le dispositif de détection selon l'invention peut être appliqué à tout autre équipement dans lequel on veut détecter les fuites d'une enceinte supposée étanche.

L'enceinte 1 est raccordée à un dispositif de pompage à vide 15 par une canalisation de vide 2, ou ligne de pompage. Par le dispositif de pompage 15, l'enceinte 1 est mise en dépression, c'est-à-dire que l'atmosphère intérieure de l'enceinte 1 est à faible pression vis-à-vis de l'atmosphère extérieure, par exemple à une pression de 10 mTorr à 50 Torr environ.

L'enceinte comporte une porte 1a par laquelle on peut par exemple introduire et retirer une tranche de semi-conducteur 1 c. Une vanne 1 b peut piloter le flux de gaz pompé hors de l'enceinte 1.

Le dispositif de détection de fuites comprend des moyens de génération de plasma, pour générer un plasma 4 dans l'atmosphère gazeuse de l'enceinte 1. Le plasma 4 peut être généré soit directement dans l'enceinte 1, soit dans une dérivation 3 de la canalisation de vide 2 comme illustré sur la figure 1, soit directement dans la canalisation de vide 2.

En alternative, on pourrait prévoir que le plasma 4 soit généré dans une canalisation spécifique autre que la canalisation de vide 2, elle-même raccordée entre un dispositif de pompage spécifique et l'enceinte 1.

Lorsqu'il est généré dans l'enceinte 1, le plasma 4 peut être soit un plasma de test spécifique, soit le plasma de procédé utilisé dans l'enceinte pour son fonctionnement.

Dans la réalisation illustrée sur la figure 1, la dérivation 3 est un tube de quartz borgne, raccordé à la canalisation de vide par son extrémité ouverte, et fermé à son extrémité opposée. La paroi périphérique du tube est entourée d'une antenne d'excitation 5 alimentée par un générateur de puissance 6, par exemple un générateur RF de type ICP ou tout autre type de générateur approprié. En alternative, on pourrait utiliser un générateur micro-ondes et une antenne adaptée.

Le générateur de puissance 6 peut délivrer une puissance de 4 Watt pour une fréquence RF d'excitation de 440 MHz. Cette fréquence RF vient exciter un électron du gaz pour le passer de son état fondamental à son état excité. Lors de la désexcitation spontanée, l'atome crée un photon constituant la lumière ainsi analysée. Les longueurs d'ondes sont caractéristiques des espèces présentes dans la chambre et de leur état d'excitation.

La radiation lumineuse émise par le plasma 4 est transmise jusqu'à un spectromètre optique 8. La transmission peut être assurée par une fibre optique 7 ou par un connecteur adapté, ou par tout autre moyen de transmission de lumière. Une première extrémité de la fibre optique 7 est raccordée à la paroi de seconde extrémité en quartz de la dérivation 3, tandis que l'autre extrémité de la fibre optique 7 est raccordée au spectromètre optique 8.

Le spectromètre optique 8 comprend un réseau de diffraction 8a, recevant la lumière provenant de la fibre optique 7. La lumière diffractée par le réseau de diffraction 8a est envoyée sur un capteur CCD 8b, qui génère de façon connue les signaux électriques image du spectre optique de la lumière incidente, et qui les envoie par une ligne 9 à un ordinateur 10.

Le capteur CCD peut être un détecteur de 2 048 pixels, approprié pour analyser un spectre d'émission dans la plage des longueurs d'onde allant de 600 à 900 nm, plage caractéristique des espèces significatives de l'air (H₂O, N₂, O₂).

L'ordinateur 10, schématiquement illustré, comprend une unité centrale 11 connectée à des moyens de visualisation 13 tels qu'un écran, et connectée à une mémoire 14 et des moyens d'entrée-sortie 12.

La mémoire 14 contient une zone de programmes 14a dans laquelle sont enregistrés des programmes.

La mémoire 14 contient une zone de mémoire de mesures 14b, dans laquelle peuvent être enregistrées les données des spectres optiques reçues du spectromètre optique 8.

L'ordinateur 10 peut être un ordinateur dédié, affecté à la détection de fuites.

En alternative, l'ordinateur 10 peut être un ordinateur qui pilote le procédé d'utilisation normale de l'enceinte 1.

La zone de programmes 14a contient notamment un programme de test de fuites, qui scrute les signaux électriques émis par les éléments du capteur CCD 8b correspondant à certaines plages choisies du spectre, et qui émet un message de présence d'une fuite en cas d'apparition de certaines raies spectrales choisies dans la plage scrutée.

Considérons maintenant le fonctionnement du dispositif de la figure 1 pour la réalisation d'une détection de fuites.

Dans une première situation, on veut vérifier la qualité d'étanchéité d'une enceinte par exemple après une opération de maintenance ayant consisté au changement de certaines pièces d'étanchéité. De telles opérations de maintenance sont nécessaires périodiquement au cours de la vie d'un équipement de fabrication de semi-conducteurs, par exemple. On introduit alors dans l'enceinte 1 un gaz de purge destiné à remplacer l'air présent dans l'enceinte 1 lors de l'opération de maintenance. Le dispositif de pompage 15 évacue l'air pendant l'introduction du gaz de purge, et met l'enceinte 1 en dépression vis-à-vis de l'atmosphère extérieure. Le gaz de purge devient largement majoritaire dans l'enceinte, et de façon idéale il devient le seul gaz présent dans l'enceinte en l'absence de fuites.

Le gaz de purge est choisi parmi les gaz normalement absents dans l'atmosphère extérieure à l'enceinte, ou parmi les gaz qui sont présents en quantité infinitésimale dans l'atmosphère extérieure à l'enceinte.

On génère le plasma 4 et on recherche, dans le spectre optique de la radiation émise par le plasma 4, la présence d'au moins une raie spectrale de l'un des gaz présents dans l'atmosphère extérieure, que l'on appellera gaz de test. Par exemple, le gaz de test peut être l'oxygène O₂, l'humidité H₂O, l'azote N₂.

Du fait du choix du gaz de purge parmi les gaz qui ne sont pas normalement présents dans l'atmosphère extérieure, en l'absence de fuite dans l'enceinte 1, on ne pourra pas trouver, dans le spectre optique émis par le plasma 4, la présence d'une raie spectrale du gaz de test présent dans l'atmosphère extérieure. Mais, en présence de fuites, une certaine quantité du gaz de test va pénétrer dans l'enceinte 1, et sera détectée par l'observation d'une raie spectrale distinctive de ce gaz de test.

Selon une seconde situation, on réalise le test au cours d'au moins une étape du procédé d'utilisation normale de l'enceinte 1.

Au cours de cette étape d'utilisation normale de l'enceinte 1, l'enceinte 1 se trouve en dépression vis-à-vis de l'atmosphère extérieure, et contient un gaz ou mélange de gaz majoritaire qui assure le fonctionnement normal de l'enceinte 1, c'est-à-dire par exemple un procédé de gravure de tranches de semi-conducteurs, et dans lequel est absent au moins un gaz de test présent dans l'atmosphère extérieure à l'enceinte 1.

Le gaz de test diffuse à partir de l'atmosphère extérieure vers l'intérieur de l'enceinte 1 par la fuite. La dépression de l'enceinte 1 vis-à-vis de l'atmosphère extérieure permet avantageusement d'accélérer cette diffusion. La détection de fuite sera donc rapide.

On génère alors le plasma 4 simultanément à l'étape de fonctionnement normal de l'enceinte 1, et on recherche, comme précédemment, dans le spectre optique de la radiation émise par le plasma 4, la présence d'au moins une raie spectrale distinctive du gaz de test.

Par l'utilisation du générateur de plasma et du spectromètre optique 8, il est possible d'effectuer la génération de plasma 4 et la détection optique dans les conditions de pression généralement rencontrées dans les étapes des procédés de fabrication de semi-conducteurs. On peut donc réaliser la détection de fuites de façon simple et peu onéreuse pendant le déroulement des étapes normales des procédés d'utilisation de l'enceinte 1, sans perturber ces procédés.

Autrement dit, pendant ces étapes de procédés, l'atmosphère se trouve dans une condition favorable à la génération du plasma 4 et à la détection optique.

Toutefois, certaines étapes des procédés normaux d'utilisation de l'enceinte 1 peuvent être défavorables à la génération du plasma 4, par exemple si la pression gazeuse est trop basse ou trop élevée. Certaines étapes de procédés peuvent également être défavorables à la détection optique du gaz de test, par exemple si le mélange de gaz majoritaire contenu dans l'enceinte présente un spectre optique dans lequel le spectre du gaz de test est difficile à distinguer.

Pour éviter cette difficulté, on peut prévoir des moyens pour synchroniser la détection de fuites avec les étapes du procédé de fonctionnement normal de l'enceinte, afin de réaliser les étapes de détection de fuites pendant les étapes favorables du procédé normal d'utilisation de l'enceinte.

En pratique, la zone de programmes 14a de la mémoire 14 de l'ordinateur 10 peut contenir une séquence de programmes qui commande le fonctionnement du générateur de puissance 6 et l'acquisition des signaux provenant du capteur CCD 8b pendant les seules étapes favorables du procédé normal d'utilisation de l'enceinte 1, c'est-à-dire les étapes au cours desquelles la génération du plasma 4 est aisée et la détection du spectre du gaz de test est également aisée.

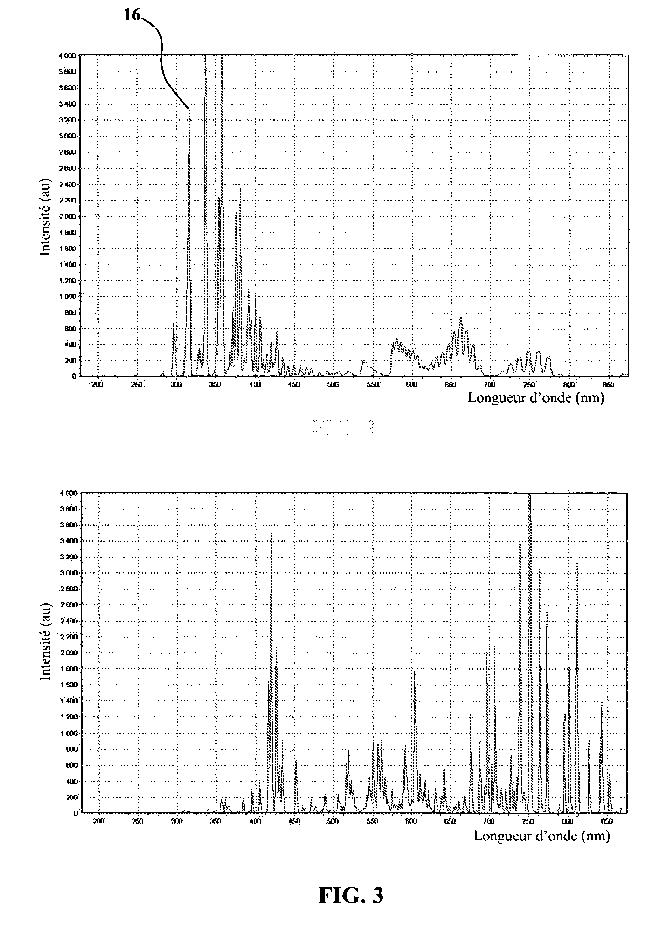

Pour illustrer le caractère aisé ou non de la détection du spectre du gaz de test, on considère maintenant les figures 2 à 4.

Sur la figure 2, on a illustré un spectre d'émission optique de l'azote, c'est-à-dire le graphique illustrant l'intensité d'émission optique en fonction de la longueur d'onde.

Ce spectre comprend notamment une raie spectrale distinctive 16, autour de la longueur d'onde 337,1 nm, qui présente une bonne intensité lumineuse et une forme étroite.

On considère parallèlement la figure 3 qui illustre un spectre d'émission optique de l'argon. On remarquera que l'argon ne présente quasiment pas d'émission optique en dessous de la longueur d'onde 350 nm. La plupart de ses émissions optiques se situent au-dessus de 400 nm, tandis que la plupart des émissions optiques de l'azote se situent au-dessous de 400 nm.

Dans un mélange gazeux, chaque gaz provoque une émission optique qui se répartit sensiblement selon son propre spectre d'émission optique. Autrement dit, dans le spectre d'émission optique d'un mélange gazeux, on retrouve en principe toutes les raies d'émission des spectres des gaz constituant le mélange. Tel est le cas de l'air, qui entoure généralement l'enceinte 1 à tester.

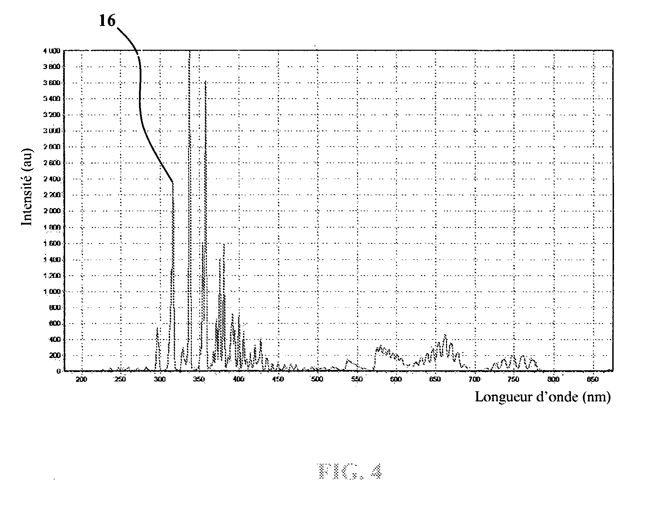

Sur la figure 4, dans le spectre d'émission optique de l'air, on retrouve les raies spectrales de l'azote (figure 2), l'azote étant un constituant majoritaire de l'air. On retrouve notamment la raie spectrale distinctive 16. Cela illustre le fait que les mélanges gazeux présentent une émission spectrale qui combine les spectres de chacun des constituants du mélange.

Dans le cas d'une enceinte 1 entourée d'air, on peut supposer que la fuite conduira à la pénétration de tous les composants de l'air à l'intérieur de l'enceinte 1, mais que cela permettra encore la détection de la fuite par la surveillance de la seule raie spectrale distinctive 16 à 337,1 nm de l'azote.

Supposons donc que, dans l'enceinte 1 à tester, se trouve l'argon comme gaz majoritaire, et qu'on recherche la présence d'azote comme gaz de test, l'azote étant présent dans l'atmosphère extérieure. En présence de fuite, il y aura alors dans l'enceinte un mélange d'argon et d'azote. Si l'on détecte alors par exemple la raie spectrale distinctive 16, cela signifiera que de l'azote est présent dans l'enceinte 1. Cette raie spectrale distinctive 16 est facile à dissocier du spectre de l'argon, même si l'azote est en quantité très faible dans l'enceinte.

On comprend qu'il y a intérêt à utiliser un gaz majoritaire tel que l'argon, qui présente des raies spectrales bien spécifiques avec des plages dépourvues d'émission. Ce type de spectre peut être obtenu en utilisant d'autres gaz monoatomiques.

En présence de gaz dont les molécules sont constituées de plusieurs atomes différents, chaque atome provoque une émission dans son propre spectre, de sorte que le spectre global est plus complexe, et la détection du gaz de test est alors plus délicate.

Les gaz monoatomiques ont des spectres optiques peu bruités, avec un nombre de raies limité, ce qui facilite l'observation de l'apparition et de la croissance de la raie du gaz de test suivi.

L'argon a l'avantage d'être plasmagène, c'est-à-dire que c'est un gaz qui facilite l'obtention du plasma 4, notamment pour une plage de pressions plus faibles ou plus élevées que la plage de pressions optimale. L'argon possède encore l'avantage d'avoir un spectre qui comporte des zones inactives de longueur d'onde comportant très peu de raies et de faible intensité. Ces zones inactives ont l'avantage de correspondre aux zones d'apparition des raies du spectre de l'azote, ce qui permet d'augmenter la sensibilité de détection.

Le plasma d'azote est facile à amorcer, et son spectre est facile à interpréter.

En choisissant correctement le gaz majoritaire et le gaz de test, on peut ainsi obtenir une grande sensibilité dans la recherche des fuites, et la mise en oeuvre de cette recherche est peu onéreuse.

On peut avantageusement mettre en relation temporelle l'évolution des traces de présence du gaz de test dans l'enceinte avec la suite des événements fonctionnels de l'équipement comprenant l'enceinte 1 à tester, pour en déduire l'origine possible des variations dans ladite évolution des traces de gaz de test.

Par exemple, on peut ainsi repérer qu'une augmentation brusque de présence du gaz de test est simultanée avec l'ouverture d'une porte 1a de l'équipement, et l'on en déduit alors que le gaz de test est apporté non pas par une fuite mais par la mise en communication avec une atmosphère différente à travers la porte 1a.

Ces moyens pour mettre en relation temporelle l'évolution de la présence du gaz de test avec les événements fonctionnels de l'équipement peuvent comprendre l'unité centrale 11 associée à un sous-programme approprié, par exemple pour visualiser de manière synchrone sur les moyens de visualisation l'évolution temporelle de la présence du gaz de test et les événements fonctionnels de l'équipement tels que les ouvertures d'une porte 1a, les injections de gaz, les ouvertures et fermetures de vannes 1 b, les introductions ou extractions de tranches de semi-conducteurs 1c.

Un exemple d'application particulièrement important du procédé selon l'invention est le contrôle des chambres de procédés ou chambres de transfert dans la fabrication des semi-conducteurs. Un tel contrôle, rendu possible et peu onéreux par le procédé de l'invention, consiste à suivre l'évolution des traces d'un gaz de test tel que l'azote dans une chambre de procédés ou de transfert. Ce contrôle permet de détecter des problèmes qui peuvent intervenir sur le contenu de la chambre de procédés ou de transfert, c'est-à-dire sur les tranches de semi-conducteur, avant que ces tranches n'entrent dans une nouvelle chambre de procédés ou de transfert. On peut ainsi détecter une éventuelle contamination des tranches de semi-conducteur, contamination susceptible de réduire significativement le rendement de la production et les performances de l'équipement.

La description qui précède suppose que les fuites à tester se situent dans la paroi de l'enceinte où l'on effectue le test.

Toutefois, l'invention permet également de tester l'étanchéité de plusieurs enceintes connectées les unes aux autres, et l'on peut souhaiter observer à partir d'une enceinte donnée les fuites provenant d'une autre enceinte à laquelle elle est connectée. On peut aussi par exemple détecter une fuite au niveau du joint de la porte isolant les deux enceintes l'une de l'autre.

Dans le cas où le plasma est généré dans une chambre de transfert, dont la pression est inférieure à celle de la chambre de procédés à laquelle elle est connectée, le gaz de test peut alors être un gaz de procédé tel que le fluor ou le chlore.

Lorsque les deux chambres connectées sont toutes deux sous vide, l'écoulement des gaz est principalement réalisé par diffusion. L'enceinte dans laquelle on souhaite effectuer la détection de fuite n'a donc pas forcément besoin d'être en dépression vis-à-vis de l'enceinte que l'on veut tester. La diffusion suffit pour détecter les fuites. La mise en dépression relative de la chambre où l'on veut observer le gaz de test est toutefois avantageuse car elle accélère la diffusion et donc la détection de fuite.

## Revendications

1. Procédé pour détecter les fuites gazeuses d'une enceinte étanche, comprenant au moins une étape au cours de laquelle :
- l'enceinte (1) à tester est en dépression vis-à-vis de l'atmosphère extérieure et contient un gaz ou mélange de gaz majoritaire dans lequel est absent au moins un gaz de test,
- on génère un plasma (4) à partir du ou des gaz qui sont présents à l'intérieur de l'enceinte (1),
- on recherche, dans le spectre optique de la radiation émise par le plasma (4) du ou des gaz présents dans l'enceinte (1), la présence d'au moins une raie spectrale distinctive (16) dudit gaz de test,
**caractérisé en ce que** le gaz majoritaire à l'intérieur de l'enceinte (1) est un gaz neutre monoatomique.

2. Procédé selon la revendication 1, dans lequel le gaz majoritaire à l'intérieur de l'enceinte (1) à tester est l'argon.

3. Procédé selon l'une des revendications 1 et 2, dans lequel la pression gazeuse dans l'enceinte (1) à tester est dans la plage des pressions de 10 mTorr à 50 Torr environ, permettant la génération et l'entretien d'un plasma (4) du ou des gaz présents à l'intérieur de l'enceinte (1).

4. Procédé selon l'une des revendications 1 à 3, dans lequel le gaz de test est l'azote, et la raie spectrale distinctive (16) est à une longueur d'onde de 337,1 nm.

5. Procédé selon l'une des revendications précédentes, dans lequel le plasma (4) est généré dans l'enceinte (1) à tester, dans une canalisation de vide (2) raccordant l'enceinte (1) à un dispositif de pompage (15) ou bien dans une dérivation (3) de la canalisation de vide (2).

6. Procédé selon l'une des revendications précédente, dans lequel l'enceinte (1) à tester est connectée à une autre enceinte contenant le gaz de test.

7. Procédé selon la revendication 6, dans lequel l'enceinte (1) à tester est une chambre de transfert et l'autre enceinte est une chambre de procédé, et dans lequel le gaz de test est un gaz de procédé.

8. Dispositif de détection de fuites dans une enceinte étanche, pour la mise en oeuvre du procédé de détection de fuites gazeuses selon l'une des revendications précédentes, comprenant :
- un dispositif de génération de plasma (3, 5, 6) et des moyens (2) pour sa mise en communication avec l'enceinte (1),
- un spectromètre optique (8), adapté pour recevoir le rayonnement du plasma (4) et pour établir le spectre caractéristique des espèces gazeuses présentes dans l'enceinte (1),
- des moyens (10) de détection de la présence d'au moins une raie spectrale dans le spectre caractéristique, **caracterisé en ce que** le dispositif comprend :
- des moyens d'introduction d'un gaz neutre monoatomique, dans lequel est absent au moins un gaz de test, à l'intérieur de l'enceinte (1) à tester.

9. Dispositif selon la revendication 8, dans lequel l'enceinte (1) est une chambre sous vide d'un équipement de traitement de tranches de silicium.

10. Dispositif selon 1 revendication 8 et 9, dans lequel le dispositif de génération de plasma comprend une source plasma (3, 5) de type ICP et un générateur de puissance (6).

11. Dispositif selon l'une des revendications 8 à 10, dans lequel le spectromètre optique (8) comporte un capteur CCD (8b) et un réseau de diffraction (8a) adapté pour obtenir un spectre entre 150 et 900 nm.

12. Dispositif selon l'une des revendications 8 à 11, raccordé à une canalisation de vide (2) raccordant un dispositif de pompage (15) à l'enceinte (1) à tester.

13. Dispositif selon l'une des revendications 8 à 12, comprenant des moyens (10, 14a) pour synchoniser la détection de fuites avec les étapes du procédé de fonctionnement normal de l'enceinte (1).

14. Dispositif selon l'une des revendications 8 à 13, comprenant des moyens (11, 13) pour visualiser de manière synchrone l'évolution temporelle de présence du gaz de test et les événements fonctionnels de l'équipement incluant l'enceinte (1) à tester.

## Claims

1. Process for detecting gas leaks from a sealed chamber, comprising at least one step in which:
- the chamber pressure of the chamber (1) to be tested is reduced relative to that of the external atmosphere, the chamber containing a predominant gas or gas mixture from which at least one test gas is absent;
- a plasma (4) is generated using the gas or gases that are present inside the chamber (1); and
- the optical spectrum of the radiation emitted by the plasma (4) of the gas or gases present in the chamber (1) is analysed for the presence of at least one spectral line (16) specific to said test gas,
**characterized in that** the predominant gas inside the chamber (1) is an inert monatomic gas.

2. Process according to Claim 1, in which the predominant gas inside the chamber (1) to be tested is argon.

3. Process according to either one of Claims 1 and 2, in which the gas pressure in the chamber (1) to be tested lies in the pressure range extending from about 10 mTorr to about 50 Torr, allowing a plasma (4) to be generated and sustained using the gas or gases present inside the chamber (1).

4. Process according to one of Claims 1 to 3, in which the test gas is nitrogen, and the specific spectral line (16) has a wavelength of 337.1 nm.

5. Process according to one of the preceding claims, in which the plasma (4) is generated in the chamber (1) to be tested, in a vacuum line (2) connecting the chamber (1) to a pumping device (15), or else in a bypass line (3) of the vacuum line (2).

6. Process according to one of the preceding claims, in which the chamber (1) to be tested is connected to another chamber containing the test gas.

7. Process according to Claim 6, in which the chamber (1) to be tested is a transfer chamber and the other chamber is a processing chamber, and in which the test gas is a process gas.

8. Device for detecting leaks in a sealed chamber, implementing the process for detecting gaseous leaks according to one of the preceding claims, comprising:
- a plasma-generating device (3, 5, 6) and means (2) for placing it in communication with the chamber (1);
- an optical spectrometer (8) capable of receiving the radiation emitted by the plasma (4) and establishing the characteristic spectrum of the gaseous species present in the chamber (1);
- means (10) for detecting the presence of at least one spectral line in the characteristic spectrum, **characterized in that** the device comprises:
- means for introducing an inert monatomic gas, from which said at least one test gas is absent, into the chamber (1) to be tested.

9. Device according to Claim 8, in which the chamber (1) is a vacuum chamber of an equipment for processing silicon wafers.

10. Device according to either one of Claims 8 and 9, in which the plasma-generating device comprises an ICP plasma source (3, 5) and a power generator (6).

11. Device according to one of Claims 8 to 10, in which the optical spectrometer (8) comprises a CCD sensor (8b), and a diffraction grating (8a) designed to obtain a spectrum between 150 and 900 nm.

12. Device according to one of Claims 8 to 11, connected to a vacuum line (2) connecting a pumping device (15) to the chamber (1) to be tested.

13. Device according to one of Claims 8 to 12, comprising means (10, 14a) for synchronizing the leak detection with the steps of the normal operation of the chamber (1).

14. Device according to one of Claims 8 to 13, comprising means (11, 13) for synchronously displaying the variation in time in the amount of test gas present and events in the operation of the tool equipped with the chamber (1) to be tested.

## Patentansprüche

1. Verfahren zur Erfassung der Gaslecks eines dichten Gehäuses, das mindestens einen Schritt umfasst, währenddessen:
- das zu testende Gehäuse (1) gegenüber der Außenatmosphäre einen Unterdruck aufweist und einen Hauptgas oder ein Hauptgasgemisch enthält, in dem mindestens ein Testgas fehlt,
- ein Plasma (4) aus dem oder den Gasen erzeugt wird, das bzw. die im Inneren des Gehäuses (1) vorliegen,
- in dem optischen Spektrum der von dem Plasma (4) des oder der in dem Gehäuse (1) vorliegenden Gase abgegebenen Strahlung das Vorliegen mindestens einer kennzeichnenden Spektrallinie (16) des Testgases gesucht wird,
**dadurch gekennzeichnet, dass** das Hauptgas im Inneren des Gehäuses (1) ein einatomiges Neutralgas ist.

2. Verfahren nach Anspruch 1, wobei das Hauptgas im Inneren des zu testenden Gehäuses (1) Argon ist.

3. Verfahren nach einem der Ansprüche 1 und 2, wobei der Gasdruck in dem zu testenden Gehäuse (1) im Bereich von Drücken von 10 mTorr bis ungefähr 50 Torr liegt, der das Erzeugen und das Aufrechterhalten eines Plasmas (4) des oder der im Inneren des Gehäuses (1) vorliegenden Gase ermöglicht.

4. Verfahren nach einem der Ansprüche 1 bis 3, wobei das Testgas Stickstoff ist und die kennzeichnende Spektrallinie (16) eine Wellenlänge von 337,1 nm aufweist.

5. Verfahren nach einem der vorhergehenden Ansprüche, wobei das Plasma (4) in dem zu testenden Gehäuse (1) in einem Vakuumkanal (2), der das Gehäuse (1) mit einer Pumpvorrichtung (15) verbindet, bzw. einer Ableitung (3) des Vakuumkanals (2) erzeugt wird.

6. Verfahren nach einem der vorhergehenden Ansprüche, wobei das zu testende Gehäuse (1) mit einem anderen Gehäuse verbunden ist, das das Testgas enthält.

7. Verfahren nach Anspruch 6, wobei das zu testende Gehäuse (1) eine Transferkammer ist und das andere Gehäuse eine Verarbeitungskammer ist und wobei das Testgas ein Verarbeitungsgas ist.

8. Vorrichtung zur Erfassung von Lecks in einem dichten Gehäuse zur Durchführung des Verfahrens zur Erfassung von Gaslecks nach einem der vorhergehenden Ansprüche, wobei die Vorrichtung Folgendes umfasst:
- eine Vorrichtung zur Plasmaerzeugung (3, 5, 6) und Mittel (2) zum Verbinden dieser mit dem Gehäuse (1),
- ein optisches Spektrometer (8), das dazu eingerichtet ist, die Strahlung des Plasmas (4) aufzunehmen und das charakteristische Spektrum von in dem Gehäuse (1) vorliegenden Gasspezies zu ermitteln,
- Mittel (10) zur Erfassung des Vorliegens mindestens einer Spektrallinie mindestens eines Testgases in dem charakteristischen Spektrum, **dadurch gekennzeichnet, dass** die Vorrichtung Folgendes umfasst:
- Mittel zum Einführen eines einatomigen Neutralgases, in dem das mindestens eine Testgas fehlt, in das Innere des zu testenden Gehäuses (1).

9. Vorrichtung nach Anspruch 8, wobei das Gehäuse (1) eine unter Vakuum stehende Kammer einer Anlage zur Behandlung von Siliziumwafern ist.

10. Vorrichtung nach Anspruch 8 oder 9, wobei die Vorrichtung zur Plasmaerzeugung eine Plasmaquelle (3, 5) des ICP-Typs und einen Stromgenerator (6) umfasst.

11. Vorrichtung nach einem der Ansprüche 8 bis 10, wobei das optische Spektrometer (8) einen CCD-Sensor (8b) und ein Beugungsgitter (8a) umfasst, das dazu eingerichtet ist, ein Spektrum zwischen 150 und 900 nm zu erzielen.

12. Vorrichtung nach einem der Ansprüche 8 bis 11, die mit einem Vakuumkanal (2) verbunden ist, der eine Pumpvorrichtung (15) mit dem zu testenden Gehäuse (1) verbindet.

13. Vorrichtung nach einem der Ansprüche 8 bis 12, die Mittel (10, 14a) zur Synchronisierung der Erfassung von Lecks mit den Schritten des Verfahrens bei Normalbetrieb des Gehäuses (1) umfasst.

14. Vorrichtung nach einem der Ansprüche 8 bis 13, die Mittel (11, 13) zum synchronen Darstellen des zeitlichen Verlaufs des Vorliegens des Testgases und der Betriebsereignisse der Anlage umfasst, die das zu testende Gehäuse (1) enthält.
